(19)

Europäisches
Patentamt
European
Patent Office
Office européen
des brevets

(11) **EP 2 423 263 A1**

(12) **EUROPÄISCHE PATENTANMELDUNG**

(43) Veröffentlichungstag:
**29.02.2012 Patentblatt 2012/09**

(21) Anmeldenummer: 10174376.3

(22) Anmeldetag: **27.08.2010**

(51) Int Cl.:
***C08L 77/00*** *(2006.01)*    *C08L 23/08* *(2006.01)*
*C08L 25/12* *(2006.01)*    *C08L 51/06* *(2006.01)*
*C08L 55/02* *(2006.01)*    *C08L 77/06* *(2006.01)*
*C08L 51/00* *(2006.01)*

(84) Benannte Vertragsstaaten:
**AL AT BE BG CH CY CZ DE DK EE ES FI FR GB
GR HR HU IE IS IT LI LT LU LV MC MK MT NL NO
PL PT RO SE SI SK SM TR**
Benannte Erstreckungsstaaten:
**BA ME RS**

(71) Anmelder: **EMS-PATENT AG**
**7013 Domat / Ems (CH)**

(72) Erfinder:
• **Harder, Philipp**
  **7000 Chur (CH)**
• **Hoffmann, Botho**
  **7013 Domat/Ems (CH)**

(74) Vertreter: **Bremi, Tobias Hans**
**Isler & Pedrazzini AG**
**Postfach 1772**
**8027 Zürich (CH)**

(54) **Polyamidformmasse und daraus hergestellte Gegenstände**

(57)    Die vorliegende Erfindung betrifft einfach lakkierbare Formkörper auf Basis von Polyamiden und eine dazugehörige Polyamidformmasse mit primerfreier Lackhaftung, bestehend aus: (A) 30 - 78.5 Gew.-% Polyamid; (B) 2 - 15 Gew.-% einer Komponente oder Mischung bestehend aus: (B1) 2 - 15 Gew.-% wenigstens eines weiteren, mit dem Polyamid unverträglichen Polymers, das in einem Lösungsmittel oder einem Lösungsmittelgemisch mit einem $E_T^N(30)$-Wert im Bereich von 0.05 bis 0.36 löslich und/oder quellbar ist, und in der Polyamidmatrix (A) in Form von Partikeln derart dispergiert ist, so dass der Hauptteil der Partikel einen Durchmesser von 0.1 bis 2 $\mu$m aufweist; und (B2) 0 - 3 Gew.-% eines Verträglichkeitsvermittlers; (C) 0 - 3 Gew.-% Additive; (D) 20 - 65 Gew.-% wenigstens einer Füllstoff- oder Verstärkungskomponente, wobei die Summe der Komponenten A bis D zusammen 100 Gew.-% ergeben.

**EP 2 423 263 A1**

**EP 2 423 263 A1**

**Beschreibung**

Die Erfindung betrifft Polyamidformmassen auf Basis von Polyamiden, oder von Mischungen von Polyamiden, die insbesondere ohne Primer mit einer lösemittelhaltigen Grundierung (Basecoat) lackierbar sind und eine sehr gute Lackhaftung aufweisen. Die vorliegende Erfindung betrifft weiterhin die Verwendung derartiger Formmassen zur Herstellung von Formkörpern und lackierten Formkörpern sowie die Formkörper und die lackierten Formkörper selbst.

STAND DER TECHNIK

Viele Kunststoffteile für elektrische oder elektronische Geräte werden zu Dekorationszwecken oder zur Verbesserung des Aussehens lackiert. Für höherwertige Anwendungen müssen Polyamide mit einem dreischichtiges Lacksystem lackiert werden. Dieses Lacksystem besteht, aufgrund der üblicherweise schlechten Haftungseigenschaften am Polyamid, aus einem Primer, einer Grundierung und dem Decklack. Andere Kunststoffe, wie z.B. Polycarbonat/ABS-Blends, benötigen keine Primerschicht, da die Haftung der Grundierung auf der Kunststoffoberfläche bereits ausreichend ist. Andererseits wird die Lackiermöglichkeit von reinem Polycarbonat durch die hohe Empfindlichkeit gegenüber Lösungsmitteln, wie z.B. Aromaten, Ketonen oder Ethern, begrenzt. Abhilfe bietet zum einen die Auswahl geeigneter Lösungsmittel für die zum Einsatz kommenden Lacksysteme, so dass Spannungsrisse oder zu starkes Anlösen der Kunststoffoberfläche vermieden werden und zum anderen die Modifikation von Polycarbonat mit Polybutylenterephthalat oder ABS. Allerdings ist reines ABS auch nur gegen sogenannte milde Lösungsmittel beständig. Aromatische Kohlenwasserstoffe, Ketone, Ether, Ester und Cholorkohlenwasserstoffe verursachen Spannungsrisse. Daher brauchen Lakkierungen auf ABS-Substraten eine mit milden Lösungsmittel (z.B. aliphatische Kohlenwasserstoffe, Alkohole) eingestellte Grundierung. Um gute Lackierergebnisse zu erhalten, werden daher weniger aggressive Lösungsmittel und optimierte Ablüftungsbedingungen gewählt, so dass die Kunststoffoberfläche nicht oder nur wenig angelöst und keine Spannungsrisse erzeugt werden.

WO2005/097902A1 beschreibt ein Verfahren zur elektrostatischen Beschichtung von Automobilaussenteilen, hergestellt aus elektrisch leitfähigen Polyamidformmassen, umfassend Polyamid, Novolac, Schlagzähmodifier und elektrisch leitfähigen Füllstoffen. Es werden nur unverstärkte Typen gearbeitet, die KSZ ist auf niedrigem Niveau.

US 5,599,871 betrifft thermoplastische Formmassen mit guter Lackierbarkeit, enthaltend Polyamid 66 oder ein Copolyamid 6/66, ein spezielles amorphes Polyamid auf Basis von Bis(4-aminocyclohexyl)propan, Bis-(4-amino-3-methylcyclohexyl)methan, 2,2,4- oder 2,4,4-Trimethylhexandiamin, ein thermoplastisches Elastomer auf Basis eines MA-gepfropften Ethylen-Propylen-Copolymers, ein Fluorelastomer und ein Amidwax. Die Lackhaftung dieser Formmassen ist aber immer noch derart ungenügend, dass auch hier ein Primer verwendet werden muss.

US 7,026,394 beschreibt Blends aus Polyamid, ABS, unmodifiziertes Styrol-Maleinsäureimid-Copolymer und Styrol-Maleinsäureimid-Copolymer gepfropft mit Maleinsäureanhydrid als Verträglichkeitsvermittler. Die Polyamide leiten sich von Aminocarbonsäuren oder Lactamen ab. In den Beispielen wird lediglich Polyamid 6 gearbeitet, die Formmassen sind unverstärkt. Die Formteile für Automobilanwendungen sollen eine gute Lackierbarkeit besitzen. Die Verbesserung der mechanischen Eigenschaften soll durch den Zusatz an unmodifizierten Styrol-Maleinsäureimid-Copolymere erreicht werden.

WO-A-2009/005260 betrifft Polyamidformmassen mit verbesserter Lackhaftung. Die Haftung des Lackes wird durch eine Kombination von einem Polyalkohol und einem Epoxyharz in der Polyamidmatrix derart verbessert, so dass angeblich kein Primer appliziert werden muss. Die Vergleichsbeispiele zeigen, dass die Verwendung von ABS alleine oder in Kombination mit Epoxyharz keine Verbesserung der Lackhaftung ergeben.

EP-A-0202214 betrifft Polyamid-ABS-Blends mit Verträglichkeitsvermittler, wie z.B. SA-MA. Gearbeitet werden unverstärkte Formmassen mit verbesserter Schlagzähigkeit. Es werden keine Aussagen zur Lackierbarkeit dieser Formmassen gemacht.

EP-A-327978 betrifft füllstoffhaltige Polyamidformmassen mit verbesserter Oberfläche und Lackierbarkeit. Gegenüber den gefüllten Polyamiden wird die Lackierbarkeit durch Zusatz von 0.5 - 3 Gew.-% eines reaktiven Kautschuks erreicht. Gearbeitet werden ausschliesslich mit Wollastonit gefüllte Polyamid-6-Formmassen, die variierende Mengen an Ethylen-n-Butylacrylat-Acrylsäure-Copolymerisat als reaktiven Kautschuk enthalten. Die Lackhaftung wurde qualitativ nach DIN 53151 (Gitterschnittprüfung) beurteilt. Ob die Lackhaftung so weit verbessert werden kann, dass auf eine Primerschicht verzichtet werden kann, geht aus der Offenbarung nicht hervor.

EP-A-0394055 beschreibt Blends aus Polyphenylenether und Polyamiden, die eine verbesserte Lackhaftung aufweisen. Die Verbesserung der Lackhaftung soll durch Verwendung von Homo- und Copolymeren ungesättigter Nitrilverbindungen und/oder Alkyl(meth)arylaten erreicht werden.

US 4,500,668 beschreibt gefüllte Formmassen auf Basis von PA 66, PA MXD6 und Styrolacrylnitril-Copolymeren, die u.a. eine gute Lackhaftung aufweisen sollen. Als Lack verwendet wird ein Aminoalkydharz, das bei 130°C auf dem Substrat ausgehärtet wird. Die Formmasse mit 50% GF-Verstärkung (Beispiel 2) weist eine niedrige Reissdehnung und eine niedrige Kerbschlagzähigkeit auf.

## DARSTELLUNG DER ERFINDUNG

Aufgabe der vorliegenden Erfindung ist es deshalb, Polyamidformmassen zur Verfügung zu stellen, die zu Formkörper verarbeitet werden können, wobei die Formkörper ohne Primer lackierbar sind. D.h. ein lösemittelhaltiger Lack (sogenannte Grundierung oder Basecoat) soll auf der Polyamidformasse so gut haften, dass auf die haftverbessernde oder haftvermittelnde Primerschicht verzichtet werden kann und die Formkörper mit einem zweischichtigen Lacksystem lackierbar sind. Dabei sollen zwischen Polyamidformmasse und Grundierung ähnliche Hafteigenschaften erreicht werden, wie dies zwischen Polyamid und Primer der Fall ist.

Gleichzeitig sollen die Formkörper hochstehend sein hinsichtlich mechanischer Eigenschaften, insbesondere der Dimensionsstabilität, der Kerbschlagzähigkeit und der Festigkeit, sowie der Oberflächenqualität und der Wärmeformbeständigkeit (HDT C).

Diese Aufgabe wird durch eine Formmasse mit den Merkmalen nach Patentanspruch 1, und durch einen Formkörper mit den Merkmalen des Patentanspruches 13 gelöst. Die Unteransprüche zeigen vorteilhafte Weiterbildungen auf.

Konkret betrifft die vorliegende Erfindung eine Polyamidformmasse mit primerfreier Lackhaftung, bestehend aus:

(A) 30 - 78.5 Gew.-% Polyamid (Polyamidmatrix);
(B) 2 - 15 Gew.-% einer Komponente oder Mischung bestehend aus

(B1) 2 - 15 Gew.-% wenigstens eines weiteren, mit dem Polyamid unverträglichen Polymers, das in einem Lösungsmittel oder Lösungsmittelgemisch mit einem $E_T^N(30)$-Wert im Bereich von 0.05 bis 0.36 löslich und/ oder quellbar ist, und in der Polyamidmatrix (A) in Form von Partikeln derart dispergiert ist, so dass der Hauptteil der Partikel einen Durchmesser von 0.1 bis 2 $\mu$m aufweist; und
(B2) 0 - 3 Gew.-% eines Verträglichkeitsvermittlers;

(C) 0 - 3 Gew.-% Additive;
(D) 20 - 65 Gew.-% wenigstens einer Füllstoff- oder Verstärkungskomponente,

wobei die Summe der Komponenten A bis D zusammen 100 Gew.-% ergeben.

Unter dem Hauptteil der Partikel in der Komponente (B1) ist dabei insbesondere zu verstehen, dass mehr als 50%, vorzugsweise mehr als 60 %, insbesondere vorzugsweise mehr als 75% der Durchmesser der Partikel im angegebenen Bereich liegen.

Die erfindungsgemässen Polyamidformmassen mit guter Oberflächenqualität, guter Kerbschlagzähigkeit und exzellenter Lackierbarkeit und Lackhaftung bestehen bevorzugtermassen im wesentlichen aus den folgenden Komponenten:

(A) 30 - 78.5 Gew.-% Polyamid, bestehend aus

(A1) 60 - 100 Gew.-% teilkristallinem Polyamid; und
(A2) 0 - 40 Gew.-% transparentem Polyamid;

(B) 2 - 15 Gew.-% einer Mischung bestehend aus

(B1) 2 - 15 Gew.-% wenigstens einem weiteren, mit Polyamid unverträglichen Polymer, das in einem Lösungsmittel oder Lösungsmittelgemisch mit einem $E_T^N(30)$-Wert im Bereich von 0.05 bis 0.36 löslich und/oder quellbar ist, und in der Polyamidmatrix A derart dispergiert ist, so dass eine enge Partikelgrössenverteilung vorliegt und der Hauptteil der Partikel einen Durchmesser von 0.1 bis 2 $\mu$m liegt; und
(B2) 0 - 3 Gew.-% eines Verträglichkeitsvermittlers;

(C) 0 - 3 Gew.-% Additive;
(D) 20 - 65 Gew.-% wenigstens einer Füllstoff- oder Verstärkungskomponente,

wobei die Summe der Komponenten A bis D zusammen 100 Gew.-% ergeben.

Unter guter Oberflächenqualität ist dabei zu verstehen, dass die Oberfläche eines aus der Polyamidformmasse hergestellten, unlackierten Formkörpers bei visueller Beurteilung so einheitlich glatt und glänzend erscheint wie die Oberfläche einer Referenz ohne Komponente (B

Unter guter Kerbschlagzähigkeit ist dabei insbesondere zu verstehen, dass ein aus der Polyamidformmasse hergestellter Formkörper eine Charpy Kerbschlagzähigkeit gemäss ISO 179/1eA aufweist, die mindestens 70% der Kerbschlagzähigkeit einer Referenz mit gleichem Füllstoffgehalt aber ohne Komponente (B) erreicht. Insbesondere ist die Kerbschlagzähigkeit dann als gut zu beurteilen, wenn sie wenigstens einen Wert von 15 kJ/m$^2$, bevorzugt von wenigstens 18 kJ/m$^2$ erreicht.

Unter guter Lackierbarkeit ist dabei insbesondere zu verstehen, dass ein aus der Polyamidformmasse hergestellter Formkörper ohne Verwendung eines Primer in der unten angegebenen Klassifikation für den Haftungsgrad im Gitterschnitttest einen Wert im Bereich von 0-2, vorzugsweise im Bereich von 0-1 bei den Testbedingungen T1-T5 aufweist und zusätzlich eine Einstufung im Vibrationsabriebtest von höchstens 3, bevorzugt höchstens 2 und insbesondere bevorzugt von höchstens 1 erreicht.

Aus stofflicher Sicht betreffend Zusammensetzung der die Polyamidmatrix bildenden Polymermischung (A) umfasst die Erfindung grundsätzlich alle der unter den Merkmalen (A1) genannten teilkristallinen Polyamide, gegebenenfalls auch in Kombination mit den unter (A2) genannten anderen transparenten Polyamiden.

Der Begriff transparentes Polyamid der Komponente A2, wie er in diesem Dokument verwendet wird, soll Polyamide bezeichnen, deren Lichttransmission wenigstens 70% beträgt, vorzugsweise wenigstens 80%, insbesondere vorzugsweise wenigstens 90%, wenn das Polyamid (in reiner Form, d.h. ohne die oben angegebenen weiteren Bestandteile der erfindungsgemässen Formmasse) in Form eines dünnen Plättchens von 2 mm Dicke vorliegt. Die Messung der Lichttransmission wird dabei auf einem UV/VIS Spektrometer der Firma Perkin Elmer im Bereich von 200 bis 800 nm an Rundplatten 70x2 mm durchgeführt. Der Transmissionswert wird für den Wellenlängenbereich zwischen 500 und 700 nm angegeben. Die Rundplatten 70x2 mm werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt.

Die Komponente (A1) umfasst bevorzugtermassen 60 bis 100 Gew.-%, bevorzugt 60 bis 90 Gew.-%, insbesondere 65 bis 80 Gew.-% mindestens eines teilkristallinen Polyamids, das ausgewählt ist aus der Gruppe PA6, PA66, PA610, PA612, Pa1010, PA 1012, PA1212, PA11, PA12, PA MXD6, PA MXD10, PA MXD6/MXDI und/oder Mischungen und/oder Copolyamiden hiervon. Bevorzugt sind dabei Polyamide PA66, PA610 und PA1010, wobei insbesondere Polyamid PA66 allein bevorzugt wird.

Das teilkristalline Polyamid (Komponente (A1)) hat bevorzugtermassen eine Lösungsviskosität $\eta_{rel}$, gemessen in m-Kresol (0.5 Gew.-%, 20°C), von höchstens 2.3, bevorzugt von höchstens 2.1, insbesondere von höchstens 1.9. Bevorzugt werden Copolyamide mit einer Lösungsviskosität $\eta_{rel}$ im Bereich von 1.5 bis 2.1, insbesondere im Bereich von 1.6 bis 2.0 oder 1.7 bis 1.9.

Die Herstellung dieser teilkristallinen Polyamide erfolgt, wie aus dem Stand der Technik bekannt, durch Polykondensation bzw. Polymerisation der entsprechenden Lactame und/oder Aminocarbonsäuren und/oder Diamine und Disäuren.

Weiterhin kann die erfindungsgemässe Polyamidformmasse als zweiten Polyamidbestandteil 0 bis 40 Gew.-% mindestens eines (z.B. amorphen oder mikrokristallinen) transparenten Polyamids (A2), ausgewählt aus der Gruppe bestehend aus MACM10-18, MACMI, MACMI/12, MACMT, MXDI, PACM10-18, 6I, 6I/6T sowie Mischungen und/oder Copolyamiden hiervon, enthalten. Bevorzugt enthält die Polyamidformmasse das Polyamid (A2) in einer Konzentration von 10 - 40 Gew.-%, besonders bevorzugt in einer Konzentration von 20 - 35 Gew.-%. Dabei werden die Polyamide PA MACM12, PA 6I und 6I/6T bevorzugt eingesetzt.

In einer besonders bevorzugten Ausführungsform werden als Komponente (A2) Polyamide auf Basis von 6I- und 6T-Einheiten eingesetzt, wobei diese Polyamide folgende Zusammensetzung aufweisen:

(a21) 60 bis 100 Gew.-Teile Einheiten, bevorzugt 60 bis 80 Gew.-Teile Einheiten, besonders
bevorzugt 67 Gew.-Teile Einheiten, welche sich von Isophthalsäure (I) in Kombination mit Hexamethylendiamin (6) in nahezu äquimolarem Verhältnis ableiten,
(a22) 0 bis 40 Gew.-Teile Einheiten, bevorzugt 20 bis 40 Gew.-Teile Einheiten, besonders bevorzugt 33 Gew.-Teile Einheiten, welche sich von Terephthalsäure (T) in

Kombination mit Hexamethylendiamin (6) in nahezu äquimolarem Verhältnis ableiten, wobei die Gewichtsteile der Komponenten (a21) und (a22) zusammen 100 Gew.-Teile ergeben.

Die Polyamide (A2) besitzen dabei bevorzugt eine Lösungsviskosität $\eta_{rel}$, gemessen in m-Kresol (0,5 Gew.-%, 20°C) im Bereich von 1.3 bis 2,0, bevorzugt im Bereich von 1.4 bis 1,9, insbesondere im Bereich von 1.5 bis 1,8.

Die Herstellung der Polyamide (A2) erfolgt, wie ebenfalls aus dem Stand der Technik bekannt, durch Umsetzung von im Wesentlichen molaren Mengen der entsprechenden Diamine und Dicarbonsäuren und allfälligem Zusatz an Lactamen und/oder Aminocarbonsäuren.

Weiterhin ist zu beachten, dass das Gewichtsverhältnis Komponente (A1) / Komponente (A2) vorzugsweise im Bereich von 60/40 bis 90/10, bevorzugt im Bereich von 70/30 bis 85/15, besonders bevorzugt im Bereich von 70/30 bis 80/20 und ganz besonders bevorzugt bei 75/25 liegt.

Bezüglich der Polymermischung aus den Komponente (A1) und (A2) werden folgende Zusammensetzungen bevorzugt:

(A1): PA 66
(A2): PA 6I/6T, wobei das Mol-Verhältnis im Bereich von 65:35 bis 75:25 liegt oder insbesondere 67:33 beträgt.
(A1): PA 610 und/oder PA1010, wobei im Falle einer Mischung die Komponenten im Verhältnis von 1:1 bis 4:1 eingesetzt werden.
(A2): PA 6I/6T, wobei das Mol-Verhältnis im Bereich von 65:35 bis 75:25 liegt oder insbesondere 67:33 beträgt.
(A1): Mischung aus PA 6 und PA66, im Verhältnis von 1:2 bis 1:4, insbesondere von 1:4
(A2): PA 6I/6T, wobei das Mol-Verhältnis im Bereich von 65:35 bis 75:25 liegt oder insbesondere 67:33 beträgt.
(A1): 70-100 Gew.-% PA 1010 oder PA 1012 oder PA 11 oder PA 12
(A2): 0-30 Gew.-% PA MACM12 oder PA MACMI/12 oder PA PACM12/MACM12, wobei insbesondere bevorzugt wird, wenn die Polymermatrix ausschließlich durch Komponente (A1) gebildet wird.

Zur Erzielung einer guten Lackhaftung enthalten die erfindungsgemässen Polyamidformmassen weiterhin 2 bis 10 Gew.-% Komponente B1 sowie 0 bis 3 Gew.-% Komponente B2.

Bei Komponente (B1) handelt es sich um Polymere, die mit den Polyamidkomponenten A1 und A2 unverträglich sind und die in einem Lösungsmittel oder Lösungsmittelgemisch mit einem $E_T^N(30)$-Wert im Bereich von 0.05 bis 0.36, bevorzugt 0.06-0.33 und besonders bevorzugt 0.07-0.30 löslich oder quellbar sind. Besonders bevorzugt werden Polymere ausgewählt aus der Gruppe bestehend aus Styrol-Acrylnitril-Copolymere (SAN), Acrylnitril-Styrol-Acrylnitril-Copolymere (ASA), Acrylnitril-Butadien-Styrol-Copolymere (ABS), Styrol-Acrylnitril-Alkylacrylat-Copolymere, Acrylnitril-Alkylacrylat-Copolymere, Polymethylmethacrylat (PMMA), Polycarbonat (PC) und Polyestercarbonate Bevorzugt werden SAN, ABS, PC, PMMA sowie das Blend PC/ABS. Besonders bevorzugt werden Styrol-Acrylnitril-Copolymere und Acrylnitril-Butadien-Styrol-Copolymere.

Auf einen haftvermittelnden Primer kann insbesondere dann verzichtet werden, wenn die verwendete Grundierung (Basecoat), lösemittelhaltig ist und diese Lösungsmittel allein oder in Mischung eine Polarität entsprechend einem $E_T^N(30)$-Wert im Bereich von 0.05 bis 0.36, bevorzugt im Bereich von 0.06 bis 0.33 und insbesondere bevorzugt im Bereich von 0.07 bis 0.30 aufweisen. Diese Anforderung wird beispielhaft von folgenden Lösungsmitteln, erfüllt:

Toluol, Xylol, Tetrahydrofuran, 1,4-Dioxan, Methylethylketon, Methylpropylketon, Isobutylmethylketon, Cyclopentanon, Methylacetat, Ethylacetat, Propylacetat, Butylacetat, Propylenglykolmonomethyletheracetat, Ethylenglykolmonobutyletheracetat oder deren Mischungen. Bezüglich der Definition der $E_T^N$-Werte wird Bezug genommen auf Ch. Reichert, Solvents and Solvent Effects in organic Chemistry, Seite 363-364. Werden UV/VIS-Absorptionsspektren von Farbstoffen in verschieden polaren Lösungsmitteln gemessen, ändern sich in der Regel die Lage, Intensität und Form der Absorptionsbande in charakteristischer Weise. Diese Änderungen sind ein Ergebnis der intermolekularen Wechselwirkung zwischen Chromophor und Lösungsmittel, was zu einer Änderung der Energiedifferenz zwischen Grund- und angeregtem Zustand führt. Auf Basis dieses solvatochromen Verhaltens von Farbstoffen haben Reichardt und Dimroth den empirischen Polaritätsparameter $E_T(30)$ vorgeschlagen, der auf der Übergangsenergie für die langwelligste Absorptionsbande des Farbstoffs 2,6-Diphenyl-4-(2,4,6-triphenyl-1-pyridino)phenoxid (Farbstoff Nr. 30 in Ref. Liebigs Ann. Chem. 661, 1, 1963) basiert. Der $E_T(30)$-Wert eines Lösungsmittels ist definiert als die Übergangsenergie des gelösten Farbstoffs gemessen in kcal/mol. $E_T(30)$-Werte ermöglichen eine sehr empfindliche Charakterisierung der Polarität von Lösungsmitteln, wobei hohe $E_T(30)$-Werte mit hohen Lösungsmittelpolaritäten korrespondieren. Zur Vermeidung der nicht SI-konformen Einheit wird der $E_T(30)$-Wert eines Lösungsmittels (LM) üblicherweise gemäss Gleichung (1) unter Verwendung der hinsichtlich der Polarität extremen Referenzlösungsmitteln Wasser und Trimethylsilan (TMS) normiert.

Der normierte Polaritätsparameter wird dann als $E_T^N(30)$ bezeichnet.

$$E_T^N(30) = \frac{E_T(LM) - E_T(TMS)}{E_T(Wasser) - E_T(TMS)} = \frac{E_T(LM) - 30.7}{32.4} \qquad (1)$$

Erfindungsgemäss werden bevorzugtermassen dafür thermoplastische Polycarbonate verwendet. Polycarbonate können formal als Polyester aus Kohlensäure und aliphatischen oder aromatischen Dihydroxy-Verbindungen (Diolen) betrachtet werden können. Polycarbonate können durch Polykondensation von Phosgen mit Diolen oder durch Umesterung der Kohlensäurediester erfolgen.

Geeignete Diole (Diphenole) der Formel HO-Z-OH (I) sind solche, in denen Z ein aromatischer Rest mit 6 bis 30 C-Atomen ist, der einen oder mehrere aromatische Kerne enthalten kann, substituiert sein kann und aliphatische Reste oder cycloaliphatische Reste oder Heteroatome als Brückenglieder enthalten kann.

Beispiele für geeignete Diphenole der Formel (I) sind: Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha$-Bis-(hydroxyphenyl)-di-isopropylbenzole sowie deren kernalkylierte und kernhalogenierte Verbindungen.

Hiervon bevorzugt sind 4,4'-Dihydroxydiphenyl, 2,2-Bis-(4-hydroxyphenyl)-methan, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan und 1,1-Bis-(3,5-dimethyl-4-hydroxyphenyl)-cyclohexan.

Besonders bevorzugt werden Polycarbonate, welche Bis-(hydroxyphenyl)-alkane, insbesondere das 2,2-Bis-(4-hydroxyphenyl)-propan (Bisphenol A) enthalten. Diese sind in der Regel amorph und weisen einen Kristallitanteil von weniger als 5% auf. Sie weisen hohe Festigkeit, Schlagzähigkeit, Steifigkeit und Härte auf. Des Weiteren sind sie weitgehend beständig gegenüber Einflüssen von Witterung und Strahlung.

In einer weiteren Ausführungsform wird für Komponente (B1) SAN bevorzugt ausgewählt. SAN ist die Bezeichnung für Copolymere aus Styrol und Acrylnitril. Die bevorzugt eingesetzten SAN-Typen enthalten 20-70 Gew.-%, besonders bevorzugt 25 - 60 Gew.-% und ganz besonders bevorzugt 30 bis 50 Gew.-% Acrylnitril.

ABS sind thermoplastische und elastische Polymer-Blends, deren diskontinuierliche, elastische Phase aus Homo- oder Copolymeren des Buta-1,3-diens in einer kontinuierlichen Phase aus steifen, thermoplastischen Styrol-Acrylnitril-Copolymeren dispergiert ist. ABS gehören zur Gruppe der elastomermodifizierten Thermoplaste. Sie werden technisch hergestellt durch Copolymerisation oder Pfropfcopolymerisation der drei Basismonomeren im Emulsionspolymerisations- oder Massepolymerisations-Verfahren. Über die Variation der Mengenverhältnisse der Monomeren ist das Eigenschaftsspektrum der ABS breit beeinflußbar.

Bevorzugt werden Acrylnitril-Butadien-Styrol-Copolymere (ABS) mit folgender Zusammensetzung:

20 bis 60 Gew.-Teile Styrol;

20 bis 40 Gew.-Teile Butadien;

20 - 40 Gew.-Teile Acrylnitril.

Die hier als Komponente (B1) verwendeten Polymethacrylate werden technisch durch radikalische Polymerisation von Methacrylsäuremethylester (Initiatoren: Azo-Verbindungen, Peroxide, Redox-System) durch Substanz-, Masse- oder Perlpolymerisation hergestellt. Neben den Homo-PMMA können auch Copolymere von Methylmethacrylat mit geringen Mengen (< 10 Gew.-%) anderer Acrylate (z.B. Butylacrylat) verwendet werden.

Damit Komponente (B1) in ausreichendem Masse in der Polyamidmatrix dispergiert werden kann, enthalten die erfindungsgemässen Formmassen bevorzugt 0.01 - 3.0 Gew.-%, bevorzugt 0.1 bis 2.0 Gew.-% mindestens eines Verträglichkeitsvermittlers (Komponente B2), aufgebaut aus mindestens einem Monomer aus der Gruppe, bestehend aus Styrol, Acrylnitril, Bisphenol A, Ethylen, Methylacrylat und Methylmethacrylat, wobei der Verträglichkeitsvermittler reaktive Carbonsäure-, Carbonsäureester-, Anhydrid- oder Epoxy-Gruppen besitzt, die durch Copolymerisation oder Pfropfung mit Acrylsäure, Methacrylsäure, Methylacrylat, Methylmethacrylat, Methylbutyacrylat, Maleinsäureanhydrid, Glycidylmethacylat oder Gycidylacrylat eingeführt werden.

Insbesondere bevorzugt werden Verträglichkeitsvermittler ausgewählt aus der Gruppe bestehend aus Bisphenol A basierte Epoxidharze, Styrol-Maleinsäureanhydrid-Copolymere, Styrol-Maleinsäureanhydrid-Butadien-Copolymere, Ethylen-Glycidylmethacrylat-Copolymere, Methylmethacrylat-Acrylnitril-Butadien-Styrol-Copolymere (MABS).

In einer besonders bevorzugten Ausführungsform wird als Verträglichkeitsvermittler B2 ein mit Fumarsäure, Itaconsäure, Acrylsäure, Methacrylsäure, Maleinäsure oder Maleinsäureanhydrid gepfropfte Komponente B1 verwendet. Um eine ausreichende Dispergierung von Komponente B1 in Komponente A zu erzielen, wird bevorzugt das noch im Schnelzezustand befindliche, online-gepfropfte B1 mit A1 im Extruder gemischt und erst in einem weiteren Extrusionsschritt mit den übrigen Komponenten A2, C und D vereinigt. Um eine optimale Lackhaftung zu erreichen, muss einerseits die Dispergierung der Komponente B1 in der kontinuierlichen Phase A derart erfolgen, dass die Grössenverteilung möglichst homogen (kleine Uneinheitlichkeit) ist und die Durchmesser der einzelnen dispergierten Partikel im Mittel 2 $\mu$m unterschreiten und andererseits sollte die dispergierte Phase dennoch nicht allzu stark an die kontinuierliche Phase angebunden sein, d.h. die Haftpunkte/Bindung zwischen der kontinuierlichen und dispergierten Phase sollte auf ein erforderliches Mindestmass beschränkt bleiben. Dies wird erreicht durch den erfindungsgemäss gewählten tiefen Konzentrationsbereich der Komponente B2, des Pfropfmittels bzw. des Pfropfgrades der Komponente B1. Die analytische Bestimmung des Pfropfgrades ergab, dass die Pfropfreaktion unter den gewählten Bedingungen nahezu vollständig in Bezug auf das Pfropfmittel abläuft, d.h. 80% bis nahezu 100% des eingesetzten Pfropfmittels reagieren und werden chemisch an Komponente B1 gebunden. Um optimale mechanische Eigenschaften der Formmasse zu generieren, müsste ein Pfropfgrad im Bereich von 0.4 bis 1.5 Gew.-% eingehalten werden. Ein solch hoher Pfropfgrad führt aber zu Formmassen, die eine kaum verbesserte Lackhaftung im Vergleich zur unmodifizierten Komponente A aufweisen. Erfindungsgemäss kommen daher tiefe Konzentrationen für das Pfropfmittel zum Einsatz. Das Pfropfmittel wird in einer Konzentration von 0.05 bis 0.25 Gew.-%, bevorzugt im Bereich von 0.07 bis 0.2 Gew.-% und insbesondere bevorzugt im Bereich von 0.08 bis 0.15 Gew.-% bezogen auf die zu pfropfende Komponente B1 eingesetzt. Das Gewichtsverhältnis von Pfropfmittel und Radikalbildner beträgt dabei 5:1 bis 20:1, bevorzugt 8:1 bis 15:1 und besonders bevorzugt 10:1.

Geeignete Radikalbildner sind Peroxybenzoesäure-(2-methyl-2-butylester), Peroxybenzoesäure-t-butylester, Dicumylperoxid, t-Butylcumylperoxid, 2,5-Di(tert-butyl-(peroxy)-2,5-dimethylhexan, 1,3-Di-(2-t-butylperoxyisopropyl)-benzol, Di-t-butylperoxid, 2,5-Bis-(t-butylperoxy)-2,5-dimethyl-3-hexin. Bevorzugt wird Dicumylperoxid verwendet. Insbesondere mit der so eingestellten Morphologie und der vorhandenen, aber geringen Zwischenphasenanbindung resultieren Formmassen mit guter Lackhaftung, die direkt mit einer Grundierung - also ohne Primer - lackiert werden können. Voraussetzung hierfür ist normalerweise, dass die verwendeten Lacke lösemittelhaltig sind und die Polarität der enthaltenen Lösungsmittel oder des Lösungsmittelgemisches einem $E_T^N(30)$-Wert im Bereich von 0.05 bis 0.36 entspricht.

Die Polyamidformmasse enthält weiterhin noch teilchen- und/oder schichtförmige Füllstoffe ausgewählt aus der Gruppe, bestehend aus Glasfasern, Glasflakes, gemahlenen oder mikronisierten Glasfasern oder Glasflakes, Kohlenstofffasern, Metallfasern, Aramidfasern, Whiskers, Talk, Glimmer, Silikaten, Quarz, Titandioxid, Wollastonit, Kaolin, Kieselsäuren, Magnesiumcarbonat, Magnesiumhydroxid, Kreide, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen, natürlichen Schichtsilikaten, synthetischen Schichtsilikaten und Mischungen hiervon. Diese teilchen- und/oder schichtförmigen Füllstoffe (Komponente (D)) sind mit einem Anteil von 20 bis 65 Gewichtsprozent in der Polyamidformmasse vorhanden. Eine bevorzugte Menge an Füll- und Verstärkungsstoffen betragt 30 bis 60 Gew.-%. Bevorzugt eingesetzte Verstärkungsmittel sind Glasfasern, wobei ganz besonders flache Glasfasern, welche einen nicht-kreisförmigen Querschnitt aufweisen, bevorzugt werden.

Als bevorzugte weitere Verstärkungsstoffe seien beispielhaft Kohlenstofffasern (Carbonfasern, Graphitfasern), Borfasern, Aramid- (p- oder m-Aramidfasern (z.B. Kevlar® oder Nomex®, DuPont) oder deren Gemische) und Basaltfasern genannt, wobei die genannten Verstärkungsfasern als Kurz- oder Langfasern, auch in Form einer Mischung von verschiedenen Fasern eingesetzt werden können. In einer weiteren alternativen erfindungsgemässen Ausführungsform können die erfindungsgemässen eingesetzten Glasfasern im Gemisch mit Kohlenstofffasern (Carbonfasern, Graphitfasern) vorliegen. Durch Austausch eines Teils der Glasfasern durch Kohlenstofffasern entsteht somit ein hybridfaserverstärkter Compound, dessen Steifigkeit im Vergleich zu reinen Glasfasern erhöht ist. Das Gemisch aus Glas- und Kohlenstofffasern kann ein Gewichtsverhältnis von Glasfaser/ Kohlenstofffasern von 70/ 30 bis 97/3, insbesondere von 80/20 bis 95/5 aufweisen. Bevorzugtermassen enthalten die erfindungsgemässen Formmassen im Wesentlichen nur Glasfasern als Verstärkungsfaser, insbesondere ausschliesslich Glasfasern als Verstärkungsfaser. Die Glasfasern machen gemäss einer weiteren bevorzugten Ausführungsform im Bereich von 30 - 60 Gewichtsprozent, insbesondere 35-55 Gewichtsprozent, bevorzugt von wenigstens 40 Gewichtsprozent der Polyamidformmasse aus, wobei dieser Anteil bevorzugtermassen zur Hauptsache oder sogar ausschliesslich durch Glasfasern mit nicht-kreisförmigem Querschnitt gebildet wird.

Bevorzugt werden Glasfasern mit flacher Gestalt und einer nicht-kreisförmigen Querschnittsfläche eingesetzt, die ein Abmessungsverhältnis von der Hauptquerschnittsachse zur Nebenquerschnittsachse von 2 bis 8 aufweisen. Das Abmessungsverhältnis der Hauptquerschnittsachse zur Nebenquerschnittsachse beträgt dabei bevorzugt zwischen 3.5 und 6.0 besonders bevorzugt zwischen 3.5 und 5.0. Dabei ist die Querschnittsfläche bevorzugt länglich oval, elliptisch oder nahezu rechteckig. Die Glasfaser selbst kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind. Die Glasfasern für sich gesehen können auch mit einer Amino- oder Epoxysilanbeschichtung versehen sein.

Die erfindungsgemässen Glasfasern (D) mit nichtkreisförmiger Querschnittsfläche werden entweder als Kurzglasfaser (Schnittglas mit einer Lange von 0.2 bis 20 mm, bevorzugt 2 - 12 mm) oder als Langglasfaser (Endlosfasern oder Rovings) eingesetzt.

Ein weiteres kennzeichnendes Merkmal der eingesetzten Glasfasern besteht darin, dass die Länge der Hauptquerschnittsachse bevorzugt im Bereich von 6 bis 40 $\mu$m, insbesondere im Bereich von 17 bis 30 $\mu$m und die Länge der Nebenquerschnittsachse im Bereich von 3 bis 20$\mu$ m, insbesondere im Bereich von 4 bis 10 $\mu$m liegt.

In der Polymermischung, die die Polyamidmatrix bildet, können weiterhin noch Additive (C) in einer Menge bis zu 3 Gew.-%, bevorzugt in einer Menge von 0,1 bis 2 Gew.-% enthalten sein. Übliche Additive sind beispielsweise Wärmeschutzmittel, Antioxidanzien, Lichtschutzmittel, Gleitmittel, Fliessverbesserer, präpolymere Polyamide, insbesondere auf Basis von PA 6T/6I (70:30) und bevorzugt mit einer Lösungsviskosität von $\eta_{rel}$=1.08 - 1.3, Polyamidoligomere, Entformungsmittel, Nukleierungsmittel, Pigmente, Farbstoffe und Antidrippingmittel sowie Mischungen hiervon.

Des weiteren betrifft die vorliegende Erfindung einen Fonnkörper, respektive Formteile, welche wenigstens teilweise aus derartigen Polyamid-Formmassen bestehen, hergestellt unter Verwendung einer Polyamid-Formmasse wie oben angegeben, insbesondere bevorzugt in Form oder als Teil eines elektrischen oder elektronischen Bauteils, eines Gehäuses oder eines Gehäusebestandteils. Insbesondere Gehäuse für tragbare elektrische oder elektronische Geräte, wie z.B. Gehäuse für Mobiltelefone, Organizer (PDA), Laptop Computer, Notebooks, Netbooks, GPS-Empfänger, elektronische Spielkonsolen, mp3/4-Playern und anderen Musikaufzeichnungs- und Abspielgeräten, Navigationsgeräte, Radios, Fotokameras, Videokameras, Kamerazubehör, Uhren, Rechnern, externen Festplattenspeicher oder anderen elektronischen Speichermedien. In einer bevorzugten Ausführungsform ist unter Gehäuse ein Gehäuse eines Mobiltelefons zu verstehen, insbesondere Back Cover, Front Cover, Antennengehäuse, Backbone eines Mobiltelefons, wobei unter Backbone ein Strukturbauteil zu verstehen ist, auf das weitere Telfonbauteile wie z.B. Batterie, Bildschirm, Konnektoren und elektronische Komponenten montiert werden. Weiterhin betrifft die vorliegende Erfindung Formkörper der oben beschriebenen Art, welche mit einem lösemittelhaltigen Basecoat (als erste Lackschicht) und gegebenenfalls zusätzlich mit einem oder mehreren Topcoats ohne vorherige Beschichtung mit einem Primer lackiert wurden.

BESCHREIBUNG BEVORZUGTER AUSFÜHRUNGSFORMEN

Bevorzugte Ausführungsformen der Erfindung werden im Folgenden anhand der Ausführungsbeispiele beschrieben, die dabei lediglich zur Erläuterung und zur Stützung der in den Ansprüchen formulierten Gegenstände dienen und nicht einschränkend auszulegen sind.

Herstellung der Formmassen gemäss Beispielen B1 bis B13 und den Vergleichsbeispielen V1 bis V3

Die Formmassen der Zusammensetzungen in Tabelle 1 und 2 werden auf einem Zweiwellenextruder der Fa. Werner u. Pfleiderer Typ ZSK30 hergestellt. Alle Komponenten mit Ausnahme der Glasfasern werden in die Einzugszone dosiert. Die Glasfasern werden über einen Sidefeeder 3 Gehäuseeinheiten vor der Düse in die Polymerschmelze dosiert.

Die Gehäusetemperatur wurde als leicht absteigendes Profil zwischen 300°C und 280°C eingestellt. Bei 150 bis 200 upm wurden 15 kg Durchsatz erreicht. Nach Abkühlen der Stränge im Wasserbad wurden nach Granulierung und Trocknung bei 110°C für 24 h die Granulateigenschaften gemessen.

Die Prüfkörper wurden auf einer Arburg Spritzgießanlage hergestellt, wobei die Zylindertemperaturen mit aufsteigendem Profil von 280°C bis 310°C und eine Formtemperatur von 100°C gewählt wurden.

Herstellung von SAN-MB1 - 3

Die Formmassen der Zusammensetzungen in Tabelle 3 werden auf einem Zweiwellenextruder der Fa. Werner u. Pfleiderer Typ ZSK25 hergestellt. SAN, Maleinsäureanhydrid und Dicumylperoxid (40% in Calciumcarbonat) werden zusammen in die Einzugszone dosiert. Dazu werden Maleinsäureanhydrid und Dicumylperoxid mit ca. der 40-fachen Menge an Kaolin, z.B. in einem Pulvermischer, möglichst fein miteinander vermischt und mit einer Anrollhilfe auf SAN angerollt. Die Polyamide PA6 oder PA66 werden über einen Sidefeeder 3 Gehäuseeinheiten vor der Düse in die Polymerschmelze dosiert.

Die Gehäusetemperatur wurde als aufsteigendes Profil zwischen 120°C und 290°C eingestellt, so dass die Komponenten zunächst ohne Peroxidzerfall innig miteinander vermischt werden, bevor dann bei höheren Temperaturen die eigentliche Pfropfung stattfindet. Die Pfropfreaktion ist dann bei Zutritt der Polyamidkomponente A1 weitgehend abgeschlossen. Bei einer Schneckendrehzahl von ca. 150 upm wurden 10 kg Durchsatz erreicht. Nach Abkühlen der Stränge im Wasserbad wurden nach Granulierung und Trocknung bei 110°C für 24 h die Granulateigenschaften gemessen.

Lackierung der Formteile

Für die Durchführung der verschiedenen Lackhaftungstest werden Standardgehäuseteile eines Mobiltelefons (Modell Netto) mit dem Basecoat NG151-75620 (Beckers Industrial Coatings, basierend auf den Lösungsmittel-Hauptkomponenten Methylacetat, Butylacetat und Xylol) und dem Topcoat TM167-0030 lackiert.

Als Vergleich wird ein identisches Formteil aus der Formmasse von Vergleichsbeispiel V2,

B4 und B14 vor Auftrag des Basecoats mit dem Primer TF118-0001 beschichtet.

Erläuterungen:

PA 6:                Grilon A28 (EMS-CHEMIE AG)

| PA 66: | Radipol A45 (Radici Group) |
|---|---|
| PA 6I/6T: | Grivory G21 (EMS-CHEMIE AG) |
| PA MXD6: | MX Nylon 6000 (Mitsubishi Gas Chemical Company) |
| Terluran GP-35: | Acrylnitril-Butadien-Styrol-Coplymer (BASF SE) |
| Luran 368R: | Styrol-Acrylnitril-Copolymer (BASF SE) |
| SAN-g-MA: | SAN (Luran 368R) gepfropft mit Maleinsäureanhydrid und einem Pfropfgrad von 0.25%Xiran SZ 26180: StyrolMaleinsäureanhydrid-Copolymer mit 26 Gew.-% MAH (Polyscope Polymer BV) |
| Lotader AX8900: | Ethylen-Methylacrylat-Glycidylmethacrylat-Copolymer (Arkema) |
| Vetrotex 995 EC10: | Glasfasern mit kreisförmigem Querschnitt, einer Länge von 4.5 mm und einem Durchmesser von 10 $\mu$m (Owens Corning Fiberglas) |
| Nittobo CSG3PA-820: | Glasfaser, 3 mm lang, 28 $\mu$m breit, 7 $\mu$m dick, Aminosilanschlichte (NITTO BOSEKI, Japan) |
| Irganox 1098: | Sterisch gehindertes phenolisches Antioxidans (BASF SE) |
| Hostanox PAR24: | Organisches Phosphit, Antioxidans (Clariant Int. Ltd.) |

Die Messungen wurden nach folgenden Normen und an folgenden Prüfkörpern durchgeführt.

Thermisches Verhalten:

Schmelzpunkt, Schmelzenthalpie und Glasübergangstemperatur (Tg):

ISO-Norm 11357-11-2

Granulat

Die Differential Scanning Calorimetry (DSC) wurde mit Aufheizrate von 20 °C/min durchgeführt. Für die Glasumwandlungstemperatur (Tg) wird die Temperatur für den Onset angegeben.

Relative Viskosität:

DIN EN ISO 307, in 0,5 Gew.-%-iger m-Kresollösung, Temperatur 20 °C,

Granulat

Zug-E-Modul, Zugfestigkeit und Reissfestigkeit:

ISO 527 mit einer Zuggeschwindigkeit von 50 mm/min (unverstärkte Varianten) oder einer Zuggeschwindigkeit von 5 mm/min (verstärkte Varianten)
ISO-Zugstab, Norm: ISO/CD 3167, Typ A1, 170 x 20/10 x 4 mm, Temperatur 23 °C

Schlagzähigkeit nach Charpy:

ISO 179/*eU
ISO-Prüfstab, Norm: ISO/CD 3167, Typ B1, 80 x 10 x 4 mm, Temperatur 23 °C
**[0075]** * 1 = nicht instrumentiert, 2 = instrumentiert

Kerbschlagzähigkeit nach Charpy:

ISO 179/*eA

ISO-Prüfstab, Norm: ISO/CD 3167, Typ B1, 80 x 10 x 4 mm, Temperatur 23 °C

**[0078]**   * 1 = nicht instrumentiert, 2 = instrumentiert

Beurteilung der Oberflächenqualität

Mittels Spritzguss hergestellte Platten der Dimension 100x100x2 mm werden visuell im Vergleich zu einer Referenz (ebenfalls eine Platte 100x100x2 mm auf Basis jeweils einer Formmasse ohne Komponente B aber ansonsten identischer Zusammensetzung) beurteilt., wobei eine qualitative Bewertung der Oberflächenqualität auf einer Skala von 0 - 4 vorgenommen wird. Dabei bedeutet die Bewertung "0", dass Probe und Referenz eine gleich gute Oberflächenqualität aufweisen. Die Bewertung "4" bedeutet, dass die Probe eine deutlich schlechtere Oberfächengüte im Vergleich zur Referenz aufweist und nicht für Lackierzwecke geeignet ist.

Lackhaftung mittels Gitterschnittprüfung

Die Lackhaftung wird mittels Gitterschnittprüfung nach EN DIN ISO 2409 ausgeführt. Hierzu werden mit einem Mehrschneidenmesser je 6 bis auf den Untergrund (Substrat) durchgehende Schnitte im rechten Winkel mit einem Schnittabstand von 1 mm zueinander ausgeführt, so dass ein Gitterschnitt-Kreuz entsteht. Anschließend wird ein Klebeband mit definierter Haftkraft auf den Gitterschnitt gedrückt und wieder abgezogen, so dass lose oder schwach am Substrat haftende Lackteile entfernt werden. Die visuelle Beurteilung wird mit Hilfe einer beleuchteten Lupe durchgeführt. Die Einstufung des Haftungsgrads erfolgt gemäss den Iso-Kennwerten 0-5, die wie folgt definiert sind::

0:   Die Schnittränder sind vollkommen glatt; keines der Quadrate des Gitters ist abgeplatzt.

1:   An den Schnittpunkten der Gitterlinien sind kleine Splitter der Beschichtung abgeplatzt; abgeplatzte Fläche nicht grösser als 5% der Gitterschnittfläche.

2:   Die Beschichtung ist längs der Schnittränder und/oder an den Schnittpunkten der Gitterlinien abgeplatzt. Abgeplatzte Fläche grösser als 5%, aber nicht grösser als 15% der Gitterschnittfläche.

3:   Die Beschichtung ist längs der Schnittränder teilweise oder ganz in breiten Streifen abgeplatzt, und/oder einige Quadrate sind teilweise oder ganz abgeplatzt. Abgeplatzte Fläche grösser als 30%, aber nicht grösser als 50% der Gitterschnittfläche.

4:   Die Beschichtung ist längs der Schnittränder in breiten Streifen abgeplatzt, und/oder einige Quadrate sind ganz oder teilweise abgeplatzt. Abgeplatzte Fläche grösser als 35%, aber nicht grösser als 65% der Gitterschnittfläche.

5:   Jedes Abplatzen, das nicht mehr als Gitterschnitt-Kennwert 4 eingestuft werden kann.

Der Gitterschnitt wird frühestens 1 Woche nach dem Lackieren der Formteile und nach Lagerung bei folgenden Testbedingungen ausgeführt:

T1:   Normklima von 23°C und 50% relativer Feuchte (NK)

T2:   1 Stunde bei 85°C, dann 10 min Konditionierung im NK

T3:   48 Stunden bei 65°C, dann 1 Stunde Konditionierung im NK

T4:   96 Stunden in Klimakammer (abwechselnd 90 Minuten bei 40°C und 85% relativer Feuchte, dann 90 Minuten Abkühlen und Kondensation bei 25°C), dann 1 Stunde Konditionierung im NK

T5:   Temperaturzyklus: 4 Stunden bei -30°C, 4 Stunden bei 85°C, 16 Stunden in Klimakammer (wie unter T4); es werden 4 solche Zyklen hintereinander durchgeführt, dann vor dem Kreuzschnitttest 1 Stunde im NK konditionieren.

Lackhaftung mittels Vibrationsabriebtest

Die Haftung des Lackes auf den Formteilen wird mit einem Vibrationsabriebtest bestimmt. Dazu werden die lackierten Formteile in einem Trogvibrator der Firma Rösler einem Verschleisstest unterworfen. Der abrasive Vibrationstest mit Kunststoff-Schleifkörpern RKF 10K (3 Teile) und RKK 15P (1 Teil) sowie dem Flüssigdetergens FC120 der Firma Rösler simuliert die oberflächliche Abnutzung während des normalen Gebrauchs.

Neue Schleifkörper (mit einem totalen Volumen von ca. 15L) werden für 4 Stunden mit ca. 2L Wasser im Trogvibrator eingeschliffen, wobei alle halbe Stunde 0.5L Wasser nachgefüllt werden. Die Schleifkörper werden nach maximal 60h Betriebsdauer durch neue ersetzt.

Bei Testbeginn werden 1 - 3 Probenteile (je nach Grösse) zu den vorbereiteten Schleifkörpern gegeben. Nach Zusatz von 1L Wasser und 0.2L Detergens wird der Vibrationstest gestartet. Während dem Test werden alle 30 Minuten 0.5L Wasser in den Trog nachgefüllt. Die Testdauer beträgt 20h. Danach werden die Probenteile entnommen und visuell im Vergleich zu einer Referenzprobe hinsichtlich Verschleissspuren beurteilt. Die Beurteilung erfolgt qualitativ durch die Benotung von 0 -4, wobei die Bestnote von 0 aussagt, dass keine Verschleissspuren am lackierten Formteil zu erkennen sind.

Einstufung der Prüfergebnisse:

0:    Keine Lackschäden

1:    Kleine Lackschäden an maximal 3 Kanten des Formteils

2:    Kleine Lackschäden an mehr als 3 Kanten des Formteils

3:    Lack über grössere Bereiche hin beschädigt

4:    Lack über die gesamte Oberfläche beschädigt

Anteil Partikel von Komponente B1, die einen Durchmesser von 0.1 bis 2 $\mu$m aufweisen

Ein ISO-Zugstab wird im gesamten Umfang gekerbt, so dass ein Kaltbruch nach Kühlung in flüssigem Stickstoff definiert durchgeführt werden kann. Die Bruchflächen werden 12 Stunden in Toluol bei 25°C eingetaucht. Nach 12 Stunden Trocknen bei 40°C, erfolgt die rasterelektronenmikroskopische (REM) Untersuchung. In je zwei ausgewählten quadratischen Bereichen der REM-Aufnahmen mit einer Kantenlänge von 20 $\mu$m wird der Durchmesser aller vorhandenen Hohlräume gemessen und der Anteil Partikel bestimmt, welcher einen Durchmesser im Bereich von 0.1 bis 2 $\mu$m aufweisen. In Tabelle 2 und 3 wird der prozentuale Anteil dieser Partikel angegeben (Anteil Partikel Komponente B1).

**Tabelle 1:** Zusammensetzung und Eigenschaften der Beispiele B1 bis B5 sowie der Vergleichsbeispiele V1 bis V3

| Zusammensetzung | Einheit | V1 | V2 | V3 | B1 | B2 | B3 | B4 | V4 | B5 |
|---|---|---|---|---|---|---|---|---|---|---|
| PA66 | Gew.-% | 50.0 | 35.1 | 5.0 | 33.75 | 33.75 | 33.75 | 30.0 | 30.0 | 33.75 |
| PA6I/6T | Gew.-% | | 11.7 | | 11.25 | 11.25 | 11.25 | 10.0 | 10.0 | 11.25 |
| MXD6 | | | | 25.0 | | | | | | |
| Luran 368R | Gew.-% | | | 20.0 | 4.5 | 4.5 | 4.5 | 9.0 | 9.0 | |
| Terluran GP-35 | Gew.-% | | | | | | | | | 4.5 |
| Xiran SZ 26180 | Gew.-% | | | | 0.5 | | | | | 0.5 |
| Lotader AX8900 | Gew.-% | | | | | 0.5 | | | | |
| SAN-g-MA | Gew.-% | | | | | | 0.5 | 1.0 | 1.0 | |
| Vetrotex 995 EC10 | Gew.-% | | | 50.0 | | | | | | |
| Nittobo CSG3PA-820 | Gew.-% | 50.0 | 50.0 | | 50.0 | 50.0 | 50.0 | 50.0 | 50.0 | 50.0 |
| MVR | cm$^3$/10min | 70 | 80 | | 90 | 120 | 90 | 80 | 80 | 100 |
| Zug-E-Modul | MPa | 17000 | 17100 | 18500 | 17500 | 17400 | 17300 | 17700 | 17700 | 17200 |
| Reissdehnung | % | 2.5 | 2.6 | 1.4 | 2.3 | 2.2 | 2.4 | 2.1 | 2.1 | 2.4 |
| Reissfestigkeit | MPa | 275 | 270 | 250 | 255 | 255 | 260 | 260 | 260 | 260 |
| Schlagzähigkeit | kJ/m$^2$ | 95 | 95 | 60 | 90 | 85 | 95 | 85 | 85 | 90 |
| Kerbschlagzähigkeit | kJ/m$^3$ | 16 | 18 | 8.5 | 17 | 16 | 19 | 16 | 16 | 18 |
| Oberflächenqualität | | 1 | 0 | 3 | 0 | 0 | 0 | 1 | 1 | 1 |
| Anteil Partikel Komponente B 1 | % | - | - | - | 50 | 80 | 70 | 85 | 90 | 90 | 75 |
| Primer | | nein | nein | ja | nein | nein | nein | nein | nein | ja | nein |
| Gitterschnitt-Test T1 | | 2 | 1.5 | 0 | 1 | 1 | 1 | 1 | 0 | 0 | 2 |
| Gitterschnitt-Test T2 | | 2 | 2 | 0 | 0 | 0 | 1 | 0 | 0 | 0 | 1.5 |
| Gitterschnitt-Test T3 | | 3 | 2.5 | 0 | 1 | 0.5 | 1 | 0.5 | 0 | 0 | 1.5 |
| Gitterschnitt-Test T4 | | 2 | 1.5 | 0 | 0 | 0 | 1 | 0 | 0 | 0 | 1.5 |
| Gitterschnitt-Test T5 | | 2 | 2 | 0 | 1 | 1 | 1 | 1 | 0 | 1 | 1.5 |
| Vibrationsabriebtest | | 4 | 4 | 1 | 3 | 2 | 2 | 2 | 1 | 1 | 2 |

**Tabelle 2:** Zusammensetzung und Eigenschaften der Beispiele B6 bis B13

| Zusammensetzung | Einheit | B6 | B7 | B8 | B9 | B10 | B11 | B12 | B13 | V5 |
|---|---|---|---|---|---|---|---|---|---|---|
| PA66 | Gew.-% | 29.9 | 23.0 | 16.1 | 29.9 | 23.0 | 16.1 | 29.9 | 23.0 | 23.0 |
| PA6I/6T | Gew.-% | 11.6 | 10.9 | 10.2 | 11.6 | 10.9 | 10.2 | 11.6 | 10.9 | 10.9 |
| SAN-MB1 | Gew.-% | 7.5 | 15.0 | 22.5 | | | | | | |
| SAN-MB2 | Gew.-% | | | | 7.5 | 15.0 | 22.5 | | | |
| SAN-MB3 | Gew.-% | | | | | | | 7.5 | 15.0 | 15.0 |
| Irganox 1098 | Gew.-% | | | | | | | | | |
| Hostanox PAR24 | Gew.-% | | | | | | | | | |
| Nittobo CSG3PA-820 | Gew.-% | 50.0 | 50.0 | 50.0 | 50.0 | 50.0 | 50.0 | 50.0 | 50.0 | 50.0 |
| MVR | cm$^3$/10min | 110 | 94 | 88 | 135 | 112 | 95 | 115 | 90 | 90 |
| Zug-E-Modul | MPa | 17200 | 17500 | 17000 | 17100 | 17400 | 17100 | 17200 | 17200 | 17200 |
| Reissdehnung | % | 2.3 | 2.4 | 2.2 | 2.2 | 2.5 | 2.3 | 2.4 | 2.6 | 2.6 |
| Reissfestigkeit | MPa | 265 | 260 | 255 | 265 | 260 | 245 | 255 | 255 | 255 |
| Schlagzähigkeit | kJ/m$^2$ | 85 | 95 | 90 | 93 | 86 | 82 | 88 | 98 | 98 |
| Kerbschlagzähigkeit | kJ/m$^2$ | 18 | 19 | 22 | 19 | 19 | 21 | 17 | 19 | 19 |
| Oberflächenqualität | | 0 | 1 | 1 | 0 | 0 | 1 | 0 | 1 | 1 |
| Anteil Partikel Komponente B1 | % | 95 | 95 | 90 | 90 | 90 | 80 | 95 | 90 | 90 |
| Primer | | nein | nein | nein | nein | nein | nein | nein | nein | ja |
| Gitterschnitt-Test T1 | | 0 | 0 | 0 | 1 | 0 | 0 | 0 | 0 | 0 |
| Gitterschnitt-Test T2 | | 0 | 0 | 0 | 1 | 0 | 0 | 0 | 0 | 0 |
| Gitterschnitt-Test T3 | | 0 | 0 | 0 | 1 | 1 | 0 | 1 | 1 | 0 |
| Gitterschnitt-Test T4 | | 1 | 0 | 0 | 0 | 0 | 0 | 1 | 0 | 0 |
| Gitterschnitt-Test T5 | | 1 | 1 | 0 | 1 | 0 | 0 | 1 | 0 | 1 |
| Vibrationsabriebtest | | 2 | 1 | 1 | 2 | 1.5 | 1 | 2 | 1 | 1 |

**Tabelle 3:** Zusammensetzung PA66-SAN-Masterbatches SAN-MB1 bis SAN-MB3

| Zusammensetzung | Einheit | SAN-MB1 | SAN-MB2 | SAN-MB3 |
|---|---|---|---|---|
| PA66 | Gew.-% | 64.5 | 64.53 | |
| PA6 | | | | 64.54 |
| Luran 368R | Gew.-% | 34.9 | 34.91 | 34.92 |
| Maleinsäureanhydrid | Gew.-% | 0.08 | 0.04 | 0.04 |
| Dicumylperoxid (40 Gew.-%) | Gew.-% | 0.02 | 0.02 | 0.02 |
| Irganox 1098 | Gew.-% | 0.3 | 0.3 | 0.3 |
| Hostanox PAR24 | Gew.-% | 0.2 | 0.2 | 0.2 |

**Patentansprüche**

1. Polyamidformmasse mit primerfreier Lackhaftung, bestehend aus:

   (A) 30 - 78.5 Gew.-% Polyamid
   (B) 2 - 15 Gew.-% einer Komponente oder Mischung bestehend aus

   (B1) 2 - 15 Gew.-% wenigstens eines weiteren, mit dem Polyamid unverträglichen Polymers, das in einem Lösungsmittel oder Lösungsmittelgemisch mit einem $E_T^N(30)$-Wert im Bereich von 0.05 bis 0.36 löslich und/oder quellbar ist, und in der Polyamidmatrix (A) in Form von Partikeln derart dispergiert ist, so dass der Hauptteil der Partikel einen Durchmesser von 0.1 bis 2 μm aufweist; und
   (B2) 0 - 3 Gew.-% eines Verträglichkeitsvermittlers

   (C) 0 - 3 Gew.-% Additive;
   (D) 20 - 65 Gew.-% wenigstens einer Füllstoff oder Verstärkungskomponente, wobei die Summe der Komponenten A bis D zusammen 100 Gew.-% ergeben.

2. Polyamidformmasse nach Anspruch 1, **dadurch gekennzeichnet, dass** die Komponente (A) besteht aus

   (A1) 60 - 100 Gew.-%, vorzugsweise 60-90 Gew.-%, insbesondere vorzugsweise 65-80 Gew.-%, teilkristallinem Polyamid; und
   (A2) 0 - 40 Gew.-%, vorzugsweise 10-40 Gew.-%, insbesondere vorzugsweise 20-35 Gew.-%, transparentem Polyamid.

3. Polyamidformmasse nach Anspruch 2, **dadurch gekennzeichnet, dass** das teilkristalline Polyamid der Komponente (A1) ausgewählt ist aus der Gruppe:

   PA6, PA11, PA12, PA66, PA610, PA612, PA1010, PA1012, PA1212, MXD6, MXD10, MXD6/MXDI und/oder Mischungen und/oder Copolyamide davon,
   insbesondere bevorzugt ausgewählt ist aus der Gruppe: PA66, PA610, PA1010 und Mischungen davon, ganz besonders bevorzugt allein durch die Komponente Polyamid PA66 gebildet wird,
   und/oder dass das transparente Polyamid der Komponente (A2) ausgewählt ist aus der Gruppe: MACM10-18, MACMI, MACMI/12, MACMT, MXDI, PACM10-18, 6I, 6I/6T und/oder Mischungen und/oder Copolyamiden davon, insbesondere bevorzugt dabei ausgewählt ist aus der Gruppe MACM12, PA 6I, 6I/6T und Mischungen davon.

4. Polyamidformmasse nach einem der Ansprüche 2 oder 3, **dadurch gekennzeichnet, dass** das transparente Polyamid der Komponente (A2) wenigstens ein Polyamid auf Basis von 6I- und 6T-Einheiten enthält oder durch ein solches gebildet ist, und wobei dieses Polyamid folgende Zusammensetzung aufweist:

   (a21) 60 bis 100 Gew.-Teile Einheiten, bevorzugt 60 bis 80 Gew.-Teile Einheiten, besonders bevorzugt 67 Gew.-Teile Einheiten, welche sich von Isophthalsäure (I) in Kombination mit Hexamethylendiamin (6) in im wesentlichen äquimolarem Verhältnis ableiten,

(a22) 0 bis 40 Gew.-Teile Einheiten, bevorzugt 20 bis 40 Gew.-Teile Einheiten, besonders bevorzugt 33 Gew.-Teile Einheiten, welche sich von Terephthalsäure (T) in Kombination mit Hexamethylendiamin (6) in im wesentlichen äquimolarem Verhältnis ableiten,

wobei die Gewichtsteile der Komponenten (a21) und (a22) zusammen 100 Gew.-Teile ergeben.

5. Polyamidformmasse nach einem der Ansprüche 2-4, **dadurch gekennzeichnet, dass** innerhalb der Komponente (A) das Gewichtsverhältnis (A1) / (A2) im Bereich von 60/40 bis 90/10, bevorzugt im Bereich von 70/30 bis 85/15, besonders bevorzugt im Bereich von 70/30 bis 80/20 und ganz besonders bevorzugt bei 75/25 liegt.

6. Polyamidformmasse nach einem der vorhergehenden Ansprüche 2-5, **dadurch gekennzeichnet, dass**

(A1) durch PA 66 gebildet wird, und (A2) durch PA 6I/6T gebildet wird, wobei bei Letzterem das Mol-Verhältnis im Bereich von 65:35 bis 75:25 liegt oder insbesondere 67:33 beträgt;

oder dass (A1) durch PA 610 gebildet wird und/oder durch PA1010, wobei vorzugsweise im Falle einer Mischung die Komponenten im Verhältnis von 1:1 bis 4:1 eingesetzt werden, und (A2) durch PA 6I/6T gebildet wird, wobei bei Letzterem das Mol-Verhältnis im Bereich von 65:35 bis 75:25 liegt oder insbesondere 67:33 beträgt;

oder dass (A1) durch eine Mischung aus PA 6 und PA66 gebildet wird im Verhältnis von 1:2 bis 1:4, insbesondere von 1:4, und (A2) durch PA 6I/6T gebildet wird, wobei bei Letzterem das Mol-Verhältnis im Bereich von 65:35 bis 75:25 liegt oder insbesondere 67:33 beträgt;

oder dass (A1) durch 70-100 Gew.-% eines Polyamids ausgewählt aus der Gruppe: PA 1010, PA 1012, PA 11, PA 12 und Mischungen davon gebildet wird und (A2) durch 0-30 Gew.-% eines Polyamids ausgewählt aus der Gruppe: MACM12, MACMI/12, PACM12/MACM12, und Mischungen davon gebildet wird;

wobei jeweils insbesondere bevorzugt ist, wenn die Polymermatrix (A) ausschließlich durch Komponente (A1) gebildet wird.

7. Polyamidformmasse nach einem der vorhergehenden Ansprüche, **dadurch gekennzeichnet, dass** in der Mischung (B) die Komponente (B1) in einem Anteil im Bereich von 2-10 Gew.-% vorliegt, und die Komponente (B2) im Bereich von 0-3 Gew.-%, vorzugsweise im Bereich von 0.01-3 Gew.-%, insbesondere vorzugsweise im Bereich von 0.1-2.0 Gew.-%.

8. Polyamidformmasse nach einem der vorhergehenden Ansprüche, **dadurch gekennzeichnet, dass** die Komponente (B1) ausgewählt ist aus der Gruppe: Styrol-Acrylnitril-Copolymere, Acrylnitril-Styrol-Acrylnitril-Copolymere, Acrylnitril-Butadien-Styrol-Copolymere, Styrol-Acrylnitril-Alkylacrylat-Copolymere, Acrylnitril-Alkylacrylat-Copolymere, Polymethylmethacrylat, Polycarbonat, Polyestercarbonate sowie Mischungen davon.

9. Polyamidformmasse nach einem der vorhergehenden Ansprüche, **dadurch gekennzeichnet, dass** der Verträglichkeitsvermittler der Komponente (B2) aufgebaut ist aus mindestens einem Monomer ausgewählt aus der Gruppe: Styrol, Acrylnitril, Bisphenol A, Ethylen, Methylacrylat, Methylmethacrylat, wobei bevorzugtermassen der Verträglichkeitsvermittler reaktive Carbonsäure-, Carbonsäureester-, Anhydrid- oder Epoxy-Gruppen besitzt, die durch Copolymerisation oder Pfropfung mit Acrylsäure, Methacrylsäure, Methylacrylat, Methylmethacrylat, Methylbutyacrylat, Maleinsäureanhydrid, Glycidylmethacylat oder Gycidylacrylat eingeführt werden, wobei insbesondere bevorzugt der Verträglichkeitsvermittler ausgewählt ist aus der Gruppe: Bisphenol A basiertes Epoxidharz, Styrol-Maleinsäureanhydrid-Copolymer, Styrol-Maleinsäureanhydrid-Butadien-Copolymer, Ethylen-Glycidylmethacrylat-Copolymer, Methylmethacrylat-Acrylnitril-Butadien-Styrol-Copolymer, und/oder wobei weiterhin bevorzugtermassen als Verträglichkeitsvermittler der Komponente (B2) eine mit Fumarsäure, Itaconsäure, Acrylsäure, Methacrylsäure, Maleinäsure oder Maleinsäureanhydrid gepfropfte Komponente (B1) verwendet wird.

10. Polyamidformmasse nach einem der vorhergehenden Ansprüche, **dadurch gekennzeichnet, dass** die Komponente (B1) ein Styrol-Acrylnitril-Copolymeres ist und die Komponente (B2) Styrol-Acrylnitril-Copolymeres gepfropft mit Maleinsäureanhydrid ist, wobei letzteres bevorzugtermassen bei der Herstellung der Masse noch in der Schmelze mit einem Teil von (A1) vermischt wird.

11. Polyamidformmasse nach einem der vorhergehenden Ansprüche, **dadurch gekennzeichnet, dass** die Komponente (D), vorzugsweise vorhanden in einem Anteil im Bereich von 30-60 Gew.-%, ausgewählt ist aus der folgenden Gruppe: Glasfasern mit rundem oder flachem Querschnitt, Glasflakes, gemahlenen oder mikronisierten Glasfasern oder Glasflakes, Basaltfasern, Kohlenstofffasern, Borfasern, Metallfasern, Aramidfasern, Whiskers, Talk, Glimmer, Silikaten, Quarz, Titandioxid, Wollastonit, Kaolin, Kieselsäuren, Magnesiumcarbonat, Magnesiumhydroxid, Kreide, gemahlenes oder gefälltes Calciumcarbonat, Kalk, Feldspat, Bariumsulfat, permanentmagnetische oder magnetisierbare Metalle oder Legierungen, Glaskugeln, Hohlglaskugeln, hohlkugelige Silikatfüllstoffen, natürliche Schichtsilikate, synthetische Schichtsilikate und Mischungen hiervon, wobei im Falle von Fasern Kurzfasern und/oder Langfasern oder Mischungen davon eingesetzt sein können, und wobei weiterhin vorzugsweise die Komponente (D) im wesentlichen ausschließlich durch Glasfasern mit flachem Querschnitt, bevorzugtermassen einem Verhältnis von der Hauptquerschnittsachse zur Nebenquerschnitteachse im Bereich von 3.5-6.0, dann insbesondere bevorzugt in einem Anteil von 30-60 Gew.-%, besonders bevorzugt in einem Anteil im Bereich von 35-55 Gew.-% in der Polyamidformmasse, gebildet wird.

**12.** Polyamidformmasse nach einem der vorhergehenden Ansprüche, **dadurch gekennzeichnet, dass** wenigstens 50 Gew.-%, insbesondere bevorzugt wenigstens 75 Gew.-% der Partikel der Komponente (B1) einen Durchmesser im Bereich von 0.1-2 $\mu$m aufweisen.

**13.** Formkörper aus einer Polyamidformmasse nach einem der vorhergehenden Ansprüche oder mit einer wenigstens teilweisen oberflächlichen Beschichtung aus einer Polyamidformmasse nach einem der vorhergehenden Ansprüche.

**14.** Formkörper nach Anspruch 13, **dadurch gekennzeichnet, dass** er eine Lackierung ohne Primerschicht aufweist, und die direkt auf der Polyamidformmasse nach einem der vorhergehenden Ansprüche liegende Grundierungsschicht der Lackierung lösemittelbasiert ist, wobei das Lösungsmittel oder Lösungsmittelgemisch einem $E_T^N$ (30)-Wert im Bereich von 0.05 bis 0.36 aufweist und vorzugsweise ausgewählt ist aus der folgenden Gruppe: Toluol, Xylol, Tetrahydrofuran, 1,4-Dioxan, Methylethylketon, Methylpropylketon, Isobutylmethylketon, Cyclopentanon, Methylacetat, Ethylacetat, Propylacetat, Butylacetat, Propylenglykolmonomethyletheracetat, Ethylenglykolmonobutyletheracetat und Mischungen davon, und wobei die Lackierung zusätzlich eine darüber liegende Deckschicht aufweist.

**15.** Formkörper nach einem der Ansprüche 13 oder 14, **dadurch gekennzeichnet, dass** es sich um ein Kunststoffteil für elektrische und/oder elektronische Geräte, insbesondere um ein entsprechendes Gehäuse oder Teile davon handelt.

EP 2 423 263 A1

Europäisches
Patentamt
European
Patent Office
Office européen
des brevets

**EUROPÄISCHER RECHERCHENBERICHT**

Nummer der Anmeldung

EP 10 17 4376

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 4 500 668 A (SHIMIZU SENZO [JP] ET AL) 19. Februar 1985 (1985-02-19) * Beispiel 8 * ----- | 1-4,7-9, 11-13,15 | INV. C08L77/00 ADD. |
| X | US 2008/290331 A1 (WANG YANG [CN]) 27. November 2008 (2008-11-27) * Absätze 23-26 * ----- | 1-4,7-9, 11-13,15 | C08L23/08 C08L25/12 C08L51/06 C08L55/02 |
| X | WO 99/25771 A2 (BASF AG [DE]; WEBER MARTIN [DE]; WOLF PETER [US]; GRUTKE STEFAN [DE]) 27. Mai 1999 (1999-05-27) * Seite 17, Tabelle 1; Beispiele V2, 3, V5, V7, 8, V9 * ----- | 1-4,7-9, 11-13,15 | C08L77/06 C08L51/00 |
| X | EP 0 583 706 A1 (BAYER AG [DE]) 23. Februar 1994 (1994-02-23) * Tabelle 1 auf Seite 6 * ----- | 1-5,7-9, 11-13,15 | |

RECHERCHIERTE SACHGEBIETE (IPC)

C08L

Der vorliegende Recherchenbericht wurde für alle Patentansprüche erstellt

| Recherchenort | Abschlußdatum der Recherche | Prüfer |
|---|---|---|
| München | 18. Februar 2011 | Okunowski, Françoise |

**ANHANG ZUM EUROPÄISCHEN RECHERCHENBERICHT
ÜBER DIE EUROPÄISCHE PATENTANMELDUNG NR.**

EP 10 17 4376

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2011

| Im Recherchenbericht angeführtes Patentdokument | | Datum der Veröffentlichung | Mitglied(er) der Patentfamilie | | Datum der Veröffentlichung |
|---|---|---|---|---|---|
| US 4500668 | A | 19-02-1985 | DE | 3334561 A1 | 29-03-1984 |
| | | | JP | 59056443 A | 31-03-1984 |
| US 2008290331 | A1 | 27-11-2008 | CN | 101311221 A | 26-11-2008 |
| WO 9925771 | A2 | 27-05-1999 | CA | 2309737 A1 | 27-05-1999 |
| | | | DE | 19750725 A1 | 20-05-1999 |
| | | | EP | 1030888 A2 | 30-08-2000 |
| | | | US | 6211266 B1 | 03-04-2001 |
| EP 0583706 | A1 | 23-02-1994 | DE | 4227428 A1 | 24-02-1994 |
| | | | ES | 2108791 T3 | 01-01-1998 |
| | | | JP | 3342122 B2 | 05-11-2002 |
| | | | JP | 6184437 A | 05-07-1994 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005097902 A1
- US 5599871 A
- US 7026394 B
- WO 2009005260 A
- EP 0202214 A
- EP 327978 A
- EP 0394055 A
- US 4500668 A

**In der Beschreibung aufgeführte Nicht-Patentliteratur**

- **CH. REICHERT.** *Solvents and Solvent Effects in organic Chemistry,* 363-364
- *Ref. Liebigs Ann. Chem.,* 1963, vol. 661, 1